# EUROPEAN PATENT APPLICATION

(11) **EP 1 835 674 A2**
(43) Date of publication of application: **19.09.2007**
(21) Application number: 07251060.5
(22) Date of filing: 14.03.2007
(51) Int. Cl.: H04L 12/58, H04Q 7/22

(54) **Message delivery system and method**

(30) Priority: 14.03.2006 GB 0605125; 14.03.2006 GB 0605141; 14.03.2006 GB 0605124; 17.03.2006 GB 0605455; 26.05.2006 GB 0610520; 26.05.2006 GB 0610519
(71) Applicant: EServGlobal UK Limited, London EC4Y ODX (GB)
(72) Inventor: Heaton, Graham c/o Empower Interactive Group Limited, London W4 5YB (GB); Daly, Ian c/o Empower Interactive Group Limited, London W4 5YB (GB); Gabsatarov, Alexey c/o Empower Interactive Group Limited, London W4 5YB (GB)
(74) Representative: MacDougall, Alan John Shaw

(57) **Abstract**

A method is described for processing a message in a message transmission network that comprises at least one message handling component for receiving a message from at least one message originating entity and a plurality of message delivery components for transmitting the message to at least one destination entity in the message transmission network. The method comprises: receiving a message at the message handling component for transmission to at least one destination entity; retrieving a predefined list of message formats for the message; formatting at least a portion of the message in accordance with at least one message format from the predefined list of message formats; and storing the portion of the message as a preformatted portion for subsequent delivery.

## Description

The present application relates to the field of mobile telecommunications and, in particular, to the sending of messages or transaction data, for example multimedia messaging service (MMS) messages, between elements in the mobile telecommunications network.

The volume of messages sent within mobile telecommunications network is increasing at a fast rate. For example, the volume of Multimedia Messaging Service (MMS) messages has increased significantly in the past few years as penetration of MMS-enabled devices increases in many countries. In particular, interest in MMS application traffic has increased as messaging entities become more sophisticated and service providers and advertisers supply increasingly advanced content for distribution. The media and entertainment, and corporate and enterprise sectors increasingly use MMS services for advertising and Customer Relations Management (CRM).

However, the growth of MMS services, and particularly application to peer (A2P) MMS services is hampered by the high cost of the existing MMS infrastructure which infrastructure typically comprises: Multimedia Messaging Service Centre (MMSC), Push Proxy Gateway (PPG), and Wireless Application Protocol Gateway (WAP G/W) as set out in more detail below. Furthermore, traditional MMSCs are not appropriate for bulk MMS use: their performance with time-sensitive content is poor, their content storage is not optimised, and they have only a limited ability to perform device-specific content formatting (transcoding).

According to one aspect, there is therefore provided a method of processing a message in a message transmission network, the network comprising at least one message handling component for receiving a message from at least one message originating entity and a plurality of message delivery components for transmitting the message to at least one destination entity in the message transmission network, the method comprising:
receiving a message at the message handling component for transmission to at least one destination entity;
retrieving a predefined list of message formats for the message;
formatting at least a portion of the message in accordance with at least one message format from the predefined list of message formats;
storing the portion of the message as a preformatted portion for subsequent delivery.

Advantageously, the method may allow the message, or a portion of the message, to be preformatted or pretranscoded into one or more message formats on receipt. Different message destination entities (for example different types of mobile telephone handsets) require different message formats to enable a message to be accessed on the handset. Since the preformatted message or message portion is stored for later delivery, the delivery process for the message to handsets that require the preformatted message type may be provided more efficiently.

This contrasts with prior art systems in which messages are transcoded or formatted for delivery only on receipt of a request for delivery from the destination entity. This enables the previous systems to transcode the message only into the format(s) required by the destination entities to which the message is being sent. However, the message delivery process for each recipient may slow, since the message must be formatted before being sent and particular delays may be encountered at peak message sending times. Also, the original message must be reformatted for each destination entity, even if a number of destination entities receiving the same message require identical formatting.

It has been found that, particularly for bulk messages that are sent to a plurality of destination entities, it is more efficient to preformat at least a portion of the message on receipt and store the preformatted message for later delivery. This may reduce the amount of message formatting that needs to be undertaken, even if the message portion is transcoded into one or more formats that are not eventually used in the message delivery process.

Formatting some parts of the message may provide greater efficiency in the message delivery process than others, hence only selected portions of the message may be preformatted.

Alternatively, however, the message may be completely preformatted so that the message is ready to send as soon as a message delivery request is received.

Preferably, formatting the message comprises pretranscoding at least a portion of the message.

In a preferred embodiment, the method further comprises formatting the at least a portion of the message in accordance with a plurality of message formats from the predefined list of message formats. Preformatting the message in a plurality of different formats may prepare the message for sending to a plurality of different types of message destination entities.

In one embodiment, the at least one message format or the plurality of message formats is selected from the predefined list of message formats based on at least one criterion.

Preferably, the at least one criterion comprises at least one of:
at least one identifier associated with a destination entity for the message
at least one identifier of the type of the destination entity for the message
an attribute associated with the message
an identifier associated with the originating message entity
at least one message format used for transmission of a previous message

Hence the message format or formats selected for pretranscoding may depend on characteristics of the originating message entity or the destination message entities. For example, the network may have access to data indicating which destination message entities require which message formats and the list of destination identifiers associated with the message may then govern the formats into which the message is pretranscoded.

As a further example, the network may determine the geographical location of the originating or destination message entities and may select the message formats for preformatting that are most prevalent in those geographical areas.

In a still further example, the formats into which the message is preformatted may depend on statistical data collected in the network. For example, the network may determine which message formats were required for the delivery of previous messages (in the whole network or, for example for previous messages sent by a particular message originator) and may select the message formats to used based on these statistics.

In one embodiment, a combination of criteria may be used to determine the message format.

In an alternative embodiment, the method may comprise formatting the at least a portion of the message in accordance with each message format in the predefined list of message formats. Hence the message may be pretranscoded into every format in the list, which may comprise every possible message format known to the network. Alternatively, the list of message formats may include selected formats, for example the most common message formats required by message delivery entities.

In a further, preferred embodiment, the method further comprises receiving a request for delivery of the message from a destination entity;
determining a format for the message based on at least one attribute of the destination entity reviewing the predefined list of message formats to determine whether the message format determined is included in the predefined list of message formats.

Hence the system can determine whether it was previously aware of the message format that the destination entity is requesting.

Preferably, if the message format determined is included in the predefined list of message formats, the method further comprises:
determining whether the message has been preformatted according to the message format determined; and, if the message has been preformatted:
   delivering the message including the preformatted portion of the message to the destination entity.

Preferably, if the message format determined is not included in the predefined list of message formats, the method further comprises:
formatting the message according to the message format determined and forwarding the message to the destination entity;
storing the message format determined in the list of message formats.

Hence, if a request is received for a message in a previously unknown message format, the message may be formatted on demand, or on the fly, and forwarded to the destination entity.

Details of the previously unknown message format may then be stored in the list of message formats for use in association with further messages.

In a preferred embodiment, storing the message comprises staging the message at a plurality of distributed message delivery components in the message transmission network. As described in more detail below, this may enable the system to stage the preformatted messages closer to the network edge. This may distribute the message delivery process over a larger number of components in the network and speed up the message delivery process, since the destination entity can retrieve the message from a component closer in the message delivery network.

Preferably, the method further comprises delivering the message, including the preformatted portion of the message or a selected preformatted portion of the message to a destination entity via the message transmission network.

Preferably, the method further comprises forwarding the preformatted portion of the message to at least one message delivery component in the message transmission network. This may allow the message to be staged closer to the network edge, and so closer to its destination. The message may be forwarded to one or more selected message delivery components depending on factors such as the location of the or each destination entity for the message.

In a preferred embodiment, the method further comprises forwarding the preformatted portion of the message to a plurality of distributed message delivery components in the message transmission network. Hence the message may be staged at a plurality of components in the message transmission network closer to the network edge.

Preferably, formatting at least a portion of the message comprises formatting the audio or video content of the message.

Further preferably, formatting at least a portion of the message comprises converting the portion of the message to a JPEG format. Hence an image may be preformatted as a JPEG image.

Alternatively, formatting at least a portion of the message comprises converting the portion of the message to a GIF format. Hence an image may be preformatted as a GIF image.

In a preferred embodiment, the message transmission network comprises a mobile telecommunications network. The network may be implemented using any suitable protocol and portions of the network may be implemented using different protocols, for example MM7, SS7, IP, 3G, GPRS.

In a preferred embodiment, the message comprises a Multimedia Messaging Service (MMS) message.

Preferably, the portion of the message comprises MMS message content. For example the content may comprise an image, sound clip or moving image.

Alternatively, the message comprises an email, facsimile, voicemail or instant messenger message. The portion of the message may also comprise an image, sound clip or moving image in this embodiment.

According to a further aspect, there is provided a method of transmitting a message to at least one destination entity via a message transmission network, the network comprising at least one message handling component and a plurality of message delivery components, the network having a network edge for interfacing with message originating and destination entities using a user device protocol, wherein the message delivery components are arranged between the message handling component and the network edge, the method comprising:
receiving a message at a message handling component for transmission to at least one destination entity;
forwarding at least a portion of the message to a plurality of message delivery components;
staging the at least a portion of the message at the plurality of message delivery components;
receiving a request from the destination entity at at least one message delivery component to retrieve the at least a portion of the message.

As described herein, in previous systems, each message would be stored at a central message handling component and a request from the destination entity for the message would be transmitted back through the network to the message handling component. A communication path may then be set up between the message handling component and the destination entity to enable delivery of the message.

Advantageously, according to the present aspect, the message may be forwarded and staged at one or more message delivery components on receipt, before delivery of the message is requested from the destination entity. This may allow the message to be retrieved by the destination entity from a component closer to it in the network than the message handling component. This may increase the speed and efficiency of the message delivery process.

Further, staging the message for subsequent delivery at a plurality of message delivery components may enable the message delivery process to be distributed across a number of components. This may reduce the load on each message delivery component and reduce the load on the message handling component. Further, the distributed system may provide redundancy in the network, since the destination entity may be able to retrieve the message from one of a plurality of message delivery components. If one component fails, the request from the message delivery component may be directed to an alternative message delivery component in the network.

In a preferred embodiment, the at least a portion of the message is forwarded to the destination entity using the user device protocol. Enabling the message delivery components to communicate with the destination entity using the user device protocol may mean that no gateway component is required between the two components. This may reduce the number of components required in the network and may remove a potential bottleneck in the message delivery process.

Preferably, the message delivery components comprise a plurality of proxies connected to the message handling component.

Preferably, the message delivery components are connected to each other and to the message handling component over a network separate to the mobile telecommunications network, for example over an IP based network or an Infiniband network.

In a preferred embodiment, the message delivery component communicates directly with the destination entity.

Preferably, the message delivery component communicates with the destination entity without passing through a gateway component.

Preferably, the at least a portion of the message is preformatted in one of a plurality of message formats from a predefined list of message formats. Further preferred features of the first aspect set out above may also be provided in conjunction with the present aspect.

In one embodiment, receiving a request from the destination entity comprises receiving the request at a load balancing component associated with the message delivery components, wherein the load balancing component selects a message delivery component to which to direct the request. Hence requests from destination entities may be directed to selected message delivery components based on factors such as the real-time or expected load on those components, the geographical or network location of the components or performance measures associated with the components.

In a highly preferred embodiment, the plurality of message delivery components are positioned closer to the network edge than the message handling component.

In one embodiment, the user device protocol comprises a wireless application protocol (WAP). However, the protocol may comprise any protocol in which the user device communicates with the network. In one embodiment, the message delivery component may be configured to communicate in different protocols with different message destination entities. Hence a plurality of different types of message gateways may be replaced by the message delivery components.

According to a further aspect, there is provided a message delivery component in a message transmission network, the network comprising at least one message handling component and a plurality of message delivery components, the network having a network edge for interfacing with message originating and destination entities using a user device protocol, the method comprising:
means for receiving at least a portion of a message in a first message format from a message handling component;
means for staging the at least a portion of a message;
means for receiving a request for the at least a portion of a message from a message destination entity;
means for communicating with the message destination entity in the user device protocol to transmit the at least a portion of the message using a first communication pathway to the message destination entity.

Hence at least a portion of the message may be staged, or stored at the message delivery component even before the request from the message destination entity is received in the network. As described in more detail below, in prior art systems, messages are stored for transmission at the message handling component (or an equivalent component in the prior art network, such as an MMSC). Destination entities may then retrieve messages by requesting and setting up a connection back through the network to the message handling component.

Advantageously, in embodiments of the present aspect, messages may be stored at message delivery components closer in the network to the destination entity, hence the connection set up by the destination entity to retrieve the message may pass through a shorter network distance.

In one embodiment, the network further comprises at least one gateway component using a gateway device protocol and the message delivery component further comprises means for communicating with the gateway component in the gateway device protocol to transmit the at least a portion of the message using a second communication pathway via the gateway component to the message destination entity.

Hence the message delivery component may be installed with respect to the destination entities either behind or in front of the gateway component, for example a WAP gateway. The destination entities may therefore either connect directly to the message delivery component or via the WAP gateway.

In one embodiment, the component further comprises means for selecting a communication pathway using which to transmit the at least a portion of the message. For example, the message may be transmitted to its destination either directly or via a gateway component. The selection may be based, for example, on the protocol used by the destination entity.

In a preferred embodiment, the at least a portion of the message is received in a plurality of message formats and the message delivery component further comprises means for selecting a message having a particular message format to transmit to the message destination entity. Advantages discussed above in relation to the preformatting aspect may be provided and further features of the preformatting aspect may also be provided in conjunction with the present aspect.

In one embodiment, the message delivery component further comprises means for analysing the request received from the message destination entity to determine the message format in which to transmit the portion of the message.

In one embodiment the user device protocol comprises a WAP protocol.

In accordance with a further aspect, there is provided a message transmission network comprising at least one message handling component and a plurality of message delivery components, the network having a network edge for interfacing with message originating and destination entities using a user device protocol;
wherein the at least one message handling component comprises:
means for receiving at least one message from a message originating entity for transmission to at least one message destination entity;
means for forwarding at least a portion of the message to at least one message delivery component
wherein the plurality of message delivery components each comprise
means for receiving the least a portion of a message from the message handling component;
means for staging the at least a portion of a message;
means for receiving a request for the at least a portion of a message from a message destination entity; and
means for communicating with the message destination entity in the user device protocol to transmit the at least a portion of the message using a first communication pathway to the message destination entity.

In addition to the advantages described above, staging messages at a plurality of components close to the network edge in one embodiment may reduce the load on the message handling component. For example, if an application sends a bulk MMS message, such as a marketing message, to a plurality of recipients, different recipients may obtain the message from different message delivery components in the network, setting up connections to separate message delivery components to obtain the data. This may be more efficient than every message recipient attempting to connect to one central component to obtain the message.

In a preferred embodiment, the network further comprises at least one gateway component using a gateway device protocol and wherein at least one message delivery component further comprises means for receiving a request for the at least a portion of a message from a message destination entity via the gateway component; and means for communicating with the gateway component using the gateway device protocol to transmit the at least a portion of the message using a second communication pathway via the gateway component to the message destination entity.

Preferably, the at least one message delivery component further comprises means for selecting a communication pathway from the first and second communication pathway via which to transmit the at least a portion of the message.

Preferably, the at least a portion of the message is received in a plurality of message formats and the or each message delivery component further comprises means for selecting a message having a particular message format to transmit to the message destination entity.

Preferably, the or each message delivery component further comprises means for analysing the request received from the message destination entity to determine the message format in which to transmit the portion of the message.

In one embodiment, the user device protocol comprises a WAP protocol.

Apparatus aspect(s) corresponding to the method aspect(s) set out above may also be provided and the apparatus may further incorporate one or more of the preferred features described above. Computer program or computer program product aspect(s) may further be provided corresponding to the method aspect(s) set out above. Further a network may be configured and provided to implement the method aspect(s) set out above.

A description of one embodiment of a message transmission system and associated methods will now be described with reference to the figures in which:
Fig. 1 illustrates components of a message transmission network according to one embodiment;
Fig. 2 is a schematic diagram of a portion of a message transmission network according to one embodiment;
Fig. 3 illustrates one embodiment of a message transmission network including components of a prior art system;
Fig. 4 illustrates a further embodiment of a message transmission system;
Fig. 5 illustrates one embodiment of components of the MDSA system;
Fig. 6 illustrates a system for monitoring and controlling the distribution of messages according to one embodiment.

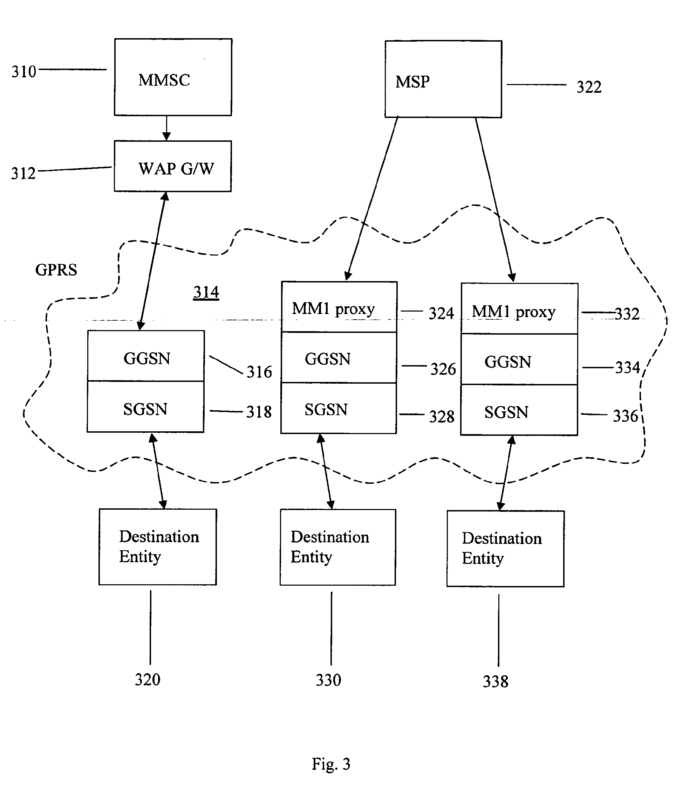

One embodiment of a prior art system and network will now be described in relation to Fig. 3.

In the prior art system, when an application sends an MMS, the application transmits the data via a network to a recipient MMSC. Upon receipt of the MMS message, the MMSC communicates via a Push Proxy Gateway system to a Short Message Service Centre (SMSC) which SMSC then sends an SMS (Short Message Service) message to the final destination message entity (for example a Short Message Entity (SME), such as a mobile telephone). This SMS notification message informs the destination entity that an MMS is available for download, it contains a Universal Resource Locator (URL) which directs the entity to the message content on the MMSC.

In a conventional MMS delivery system, with reference to Fig. 3, once a message is received at the MMSC 310 and the destination entity 320 has been notified via SMS of an message awaiting download, to retrieve the MMS message from the MMSC, the destination entity 320 sets up a connection to the MMSC 310.

The connection may be implemented, for example across a GPRS system 314 via an SGSN 318, a GGSN 316 and a WAP G/W 312; the MMSC 310 then transmits the message to the destination 320 over the connection that has been opened, via the WAP G/W 312.

If an application sends a number of identical messages to different destination entities, the MMSC will receive these messages and process each one individually; currently, there is no mechanism to remove the redundancy-associated with such an operation.

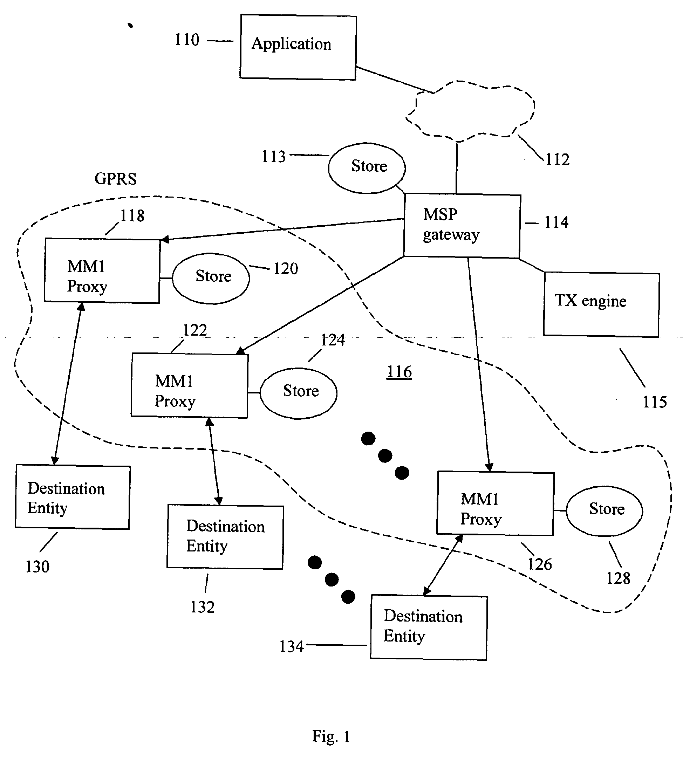

One embodiment of an improved system will now be described with reference to Fig. 1. In this embodiment, a bulk A2P MMS message is sent by an application 110 via a network 112 to a Mobile Services Platform (MSP) 114 that stores the original content in a storage unit 113. By sending only a single bulk message to the MSP instead of a number of individual MMS messages, this invention reduces backhaul (the amount of data that needs to be transmitted from the application to the MSP).

The MSP is connected to a transformation engine 115 that transcodes the MMS message into a number of SME-specific formats according to a predefined list of possible message formats. This may include transcoding the audio and/or video content of a message.

The MSP 114 then transfers the MMS message in its various pretranscoded forms to one or more MM1 proxy units 118. Each MM1 proxy 118 unit has a memory facility 120 in which to store the preformatted and original MMS message data.

Contact is then established between relevant MM1 proxy 118 and the destination entity 130, the formatting requirements of the destination entity are determined, and the appropriate preformatted MMS message is downloaded.

Contact may be established between the MM1 proxy 118 and the destination entity 130 via an MMS notification from the MSP 114, or in the same way as for MMSCs, using an SMS notification message. In the latter case, the proxy may implement some of the functionality of the PPG and WAP gateway components.

If an SME requires a format that has not been catered for and pretranscoded by the MSP, the proxy may perform dynamic transcoding prior to downloading. Each MM1 proxy may performs MSISDN resolution for the destination entities preferably using a RADIUS lookup system.

In one embodiment, the transformation engine may be implemented at the MM1 proxy rather than the MSP, and transcoding may be carried out there. Pretranscoded messages may then be transmitted to other proxies via a separate connection between the proxies.

The MSP, MM1 proxy or both may contain Digital Rights Management (DRM) enforcement software, which may ensure that messages and their contents may be transmitted to their respective destinations. Similarly, the system, preferably the MSP, includes an interface to a charging component for ensuring that messages are billed correctly to the destination or originating entity. Further, the MSP, MM1 proxy or both may contain virus scanning software, virus blocking software, or both. Further, either, or both the MSP and MM1 proxies may contain network load balancing software, or load balancing between network components may be implemented at a separate component.

The systems described herein may provide support for: MM1, MM7 R5, MM7 R6 and web services Application Program Interface (API).

As described above, in one embodiment, the transformation engine may only transcode the original message according to the types of SME that will receive the message. Knowledge of which types of SMEs will receive the message may be determined through user interaction, user interrogation, statistical analysis of previous A2P distributions, statistical analysis of previous responses, statistical analysis of the expected demographic or sociographic population of the target recipients, or the like.

The MSP, MM1 proxy, or both may further monitor and record when a message has been successfully delivered, thus allowing analysis of the system performance and acknowledgement of message delivery.

The MMS notifier may be capable of sending multiple notifications in the event of failed delivery. The number of retries that the MMS notifier sends for each message may be stored at the MSP, thus allowing analysis of the system performance.

The MSP may further be capable of associating current demand upon or usage of the infrastructure with respect to current network and delivery costs to provide real-time and flexible rating and charging.

In a further embodiment, an overflow system may be included in the network. When there is an overload of the A2P infrastructure, said overflow system may be configured to feed A2P MMS messages to the P2P or other such infrastructure or to reject further message delivery requests.

If a new type of message destination entity is encountered, the transformation machine dynamically transcodes the MMS message for delivery and then either stores, or makes available for storage -by either the MSP or the MM1 proxy- the transcoded message. Further, details of the new transcoding requirements are preferably added to a system database.

The system described may further offload A2P traffic from the present P2P infrastructure in a seamless manner and without requiring service disruptions. In addition, the efficiencies provided may reduce the cost-per-message of MMS delivery.

The system described above may further be provided with a system management, logging, statistics and alarm interface.

As described above, the MMS content may be saved locally to the proxies and therefore may be staged closer to the edge of the network than when stored at the MMSC. This has the effect of distributing the WAP G/W demands across the proxies. Both this, and also the MMS message pre-formatting (which pre-formatting reduces the number of operations required for an individual message), may increase the efficiency of the system, which may be particularly pertinent for time-sensitive MMS content. In addition, only one MMS message is required for distribution to more than one SME; this reduces the load and/or storage requirements on certain parts of the network.

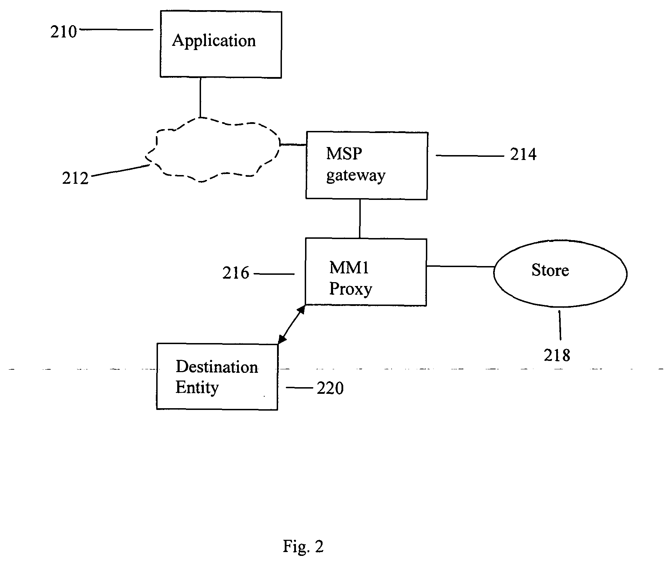

A further embodiment will now be described with reference to figure 2. This may provide a direct delivery system for the sending of A2P messages from an application 210, via a network 212 to an MSP gateway 214. The message is transcoded according to the recipient destination entity and then transmited via an MM1 proxy 216, which may have a memory facility 218, to an SME 220.

With reference to Fig. 3, once a message has been delivered to the MSP 322, the MSP 322 transmits the message to the various MM1 proxies 324,332. A destination entity 330 that has been notified of an awaiting message will then contact the relevant MM1 proxy; the MM1 proxy 324 then transmits the message directly to the destination entity 330.

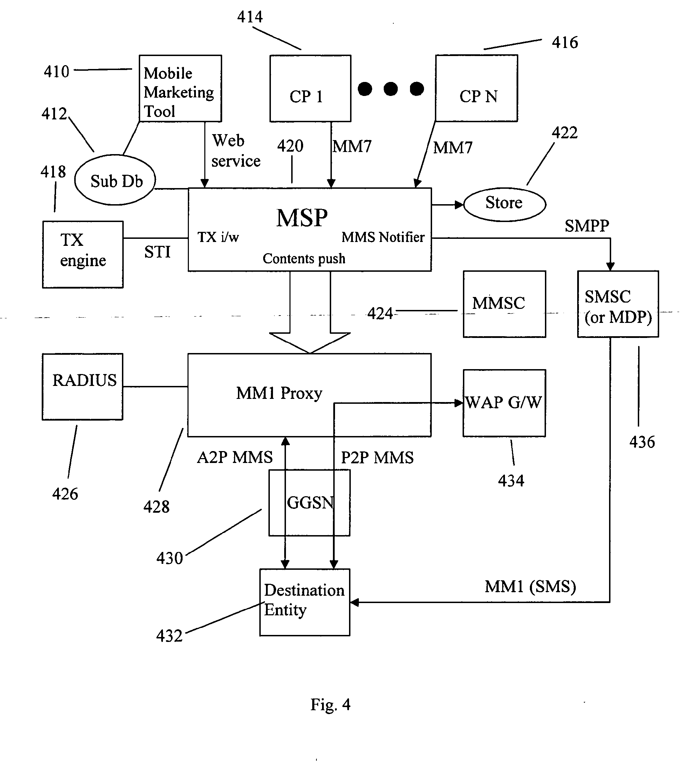

The present invention will now be described with reference to figure 4. In this invention, applications 414 that communicate to the MSP 420 using MM7 or Mobile Marketing Tools (MMT) 410 that communicate with the MSP 420 using a web service, send an A2P message to the MSP 420. An MMT 410 may be connected to a sub-database 412 that may itself be connected to the MSP 420.

The MSP 420 may be connected to a transformation engine 418 to which transformation engine 418 the MSP 420 sends the A2P message. The transformation engine 418 transcodes the A2P message into one or more formats and then sends these transcoded messages either directly, or via the MSP 420, to a storage facility 422. The MSP 420 then notifies the destination entity 432 to which the message will be sent via either an SMSC 436 or an MDP 436 using SMPP.

An SMS notification may then be sent to the destination entity 432. The MSP 420 also pushes the contents of the store 422 to the MM1 Proxy 428. The MM1 proxy 428 performs MSISDN resolution using RADIUS 426 before transmitting the appropriately transcoded messages to the destination entities 432.

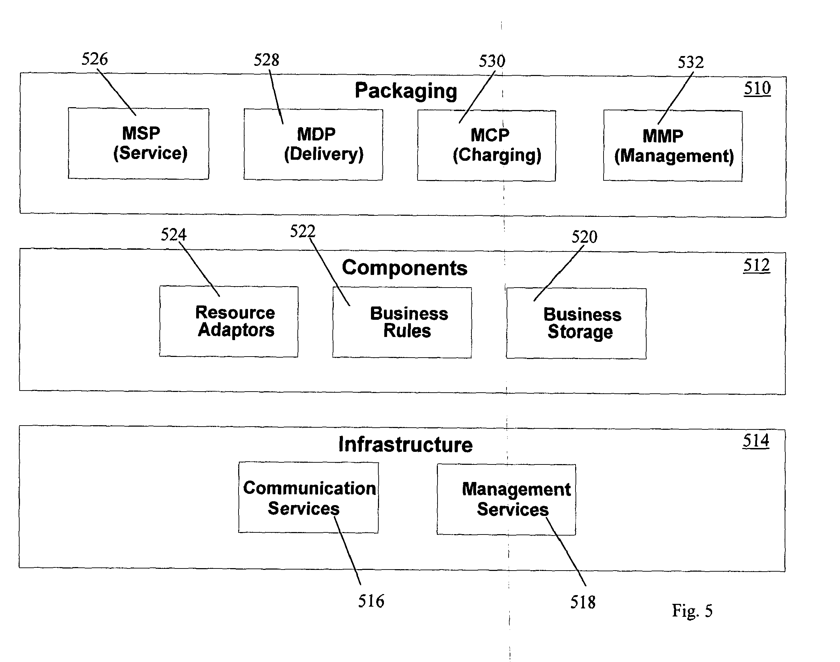

The MMS message delivery system described above may be implemented in conjunction with a Mobile Data Services Architecture system, one embodiment of which is illustrated schematically in Fig. 5 and elements of one embodiment of which are described in more detail below.

In the embodiment illustrated in Fig. 5, the architecture is divided into three core layers as described below.

The infrastructure layer 514 represents the core communication 516 and management 518 services common across all applications. Communication services 516 describe how components in the framework send and receive messages. Management services 518 describe the common components for system and application configuration and reporting.

The component layer 512 contains a collection of common components that represent the capabilities of the system. This is further broken down into resource adaptors 524 (connections to external systems), business rules 522 (how to process events from external systems), and business storage 520 (how transaction information is persisted).

The packaging layer represents common deployment topologies for the capabilities supported in the lower layers. However, it will be appreciated from the following description that the components in the packaging illustrated in Fig. 5 are only one example of how the underlying functionality may be packaged and component functionalities may be merged, increased or decreased as required for any particular deployment.

Example components of each layer and their responsibilities will now be described in more detail.

The infrastructure layer 514 represents "plumbing" used across all applications. This layer may be designed to maximise the use of existing technology (e.g. VMX) as well as various "commercial off the shelf" (COTS) products (e.g. JDMK, Tomcat, Log4J).

The communication services 516 aspect is responsible for hosting the communication backbone between business services, management services, and external resources. Components of one embodiment of the communication services 516 aspect are set out in more detail below by way of example.

Agents: A container for fine-grained application business logic. Agents send and receive messages between other agents within the application in order to execute a specific portion of business logic. The VMX may pool agents in order to increase the throughput of a particular business workflow. Agents are fully decoupled from the other business components of the application. However, agents have access to Management Services such as provisioning, logging, and statistics.

Resource Adaptors: A container for managing connections to external systems (e.g. SMSCs, content applications, prepay systems). The Resource Adaptor contract specifies the lifecycle of a connection, management information, and how events are published into the application's service agents. Specific Resource Adaptor Types may be defined to support integration with specific system types (e.g. messaging, payment). Each Resource Adaptor Type defines a set of events that it can publish and a synchronous provider interface from which applications can fire events on the adaptor.

Transport: Information that can be managed by a store. This can represent events being passed between agents as well as simple provisioning or configuration data.

Stores: Represents a buffering mechanism for events passed between Agents (effectively a queueing mechanism). The VMX supports store types for FIFO, Array Index, or Hash.

Spaces: A container that represents a collection of Stores on a physical node (e.g. a server).

Wiring: The mechanism for associating agents with stores which effectively acts as a form of event routing. The application logic within each agent is unaware of the wiring, and thus, the event routing.

The management services aspect 518 is comprised of common services used to provide configuration and reporting services to the system (i.e. the engine) and service (i.e. external applications) level components. Components of one embodiment of the management services aspect 518 are set out in more detail below by way of example.

Management: This service provides a common framework for managing the lifecycle of business components (e.g. start, stop, restart, status) as well as updating the dynamic state of a component.

Configuration: This service provides a single point of access for adding, modifying, and propagating data related to the system as a whole (e.g. nodes, connections, stores).

Provisioning: This service provides a single point of access for adding, modifying, and propagating data related to 3rd party services (e.g. accounts, users, and delivery and service profiles).

Logging: This service provides a common framework for providing centralised operational, trace, and financial logging.

Alarms: This service provides a central collection point for operational alarms (i.e. traps). This information is normally made available via SNMP.

Statistics: The service provides a central collection point for event counters that can be used to calculate statistics. This information is normally made available via SNMP.

Licensing: This service enforces the licensing agreements between the MDSA operator and network and/or application operators. This service has the capability to audit and enforce licensing constraints based on nodes, features, connections, and traffic volumes.

The component layer 512 contains the business components. Many of these components may be reused by various applications. For example, CDR generation and subscriber profiling information may be used by either the MSP or MCP.

Resource adaptors 524 represent an integration point between MDSA applications and external systems. Each resource adaptor 524 may be used to translate protocol specific business events into generic platform events (e.g. SMPP "submit_sm" into a "SubmitMessage" event) or a generic platform event into a protocol specific event (e.g. "AuthorisePayment" into a SIACC "check_balance" call). Each resource adaptor 524 may be associated with a resource adaptor type which defines the events that may be sent and received from a class of resource.

Resource adaptor types may include:
- Messaging: sends and receives message delivery events from 3rd party applications and network operator message service centres. Typical events are Submit, Deliver, Deliver Report, Enquire, Cancel, and Replace. This is a generic abstraction of SMS and MMS message events. Example implementations are SMPP, CIMD, MM7, and EAIF.
- Payment: accepts payment events to network operator prepay or mediation platform. Typical events are Check Status, Check Credit, Reserve, Charge, Release, and Refund. Example implementations are SIACC, RADIUS, DIAMETER, and CAMEL.
- CDR: generated Call Data Records based on a combination of message delivery and payment events. Example implementations are Nokia SMS and ASN.1.

The business services or business rules 522 contain components or rules for managing the message lifecycle. These may include one or more of the following.

Authentication: This service identifies the applications and service attempting to use the network. This can be simply validating large-account login credentials or identifying an application service based on short code, keywords, and billing identifiers.

Authorisation: This service determines if a given application service is allowed to deliver the message. This can be a combination of throughput controls (e.g. maximum connections or volume), message and PDU type (e.g. transmitter or receiver), as well as subscriber whitelisting, blacklisting, and SPAM controls.

Manipulation: This service determines if any modifications to the message are required prior to transport (e.g. address aliasing, default values).

Charging: This service determines if any real-time or post-processing charging activity is required (e.g. check balance, reduce funds, or generate CDR).

Routing: This service determines how a message is routed to either the network or applications. Policies are based off a combination of destination (e.g. channels and groups), priority, and percentage based routing strategies.

Delivery: This service is responsible for determining how a message is delivered between the application and the network and back. This can be one of transparent mode or store & forward mode.

The business storage services 520 represent different mechanisms for persisting request data during the message delivery lifecycle. Storage system types may include those set out below and are described in more detail in the following description.

Message Header: This type of store maintains the message control information (e.g. addresses, priority) associated with a specific delivery request.

Message Content: This type of store maintains the message content (i.e. the payload) such as a text message, ringtone, or picture. Different types of message content require different types of storage. For example, the sheer size of an MMS message requires a different storage strategy from smaller SMS messages.

Delivery Information: This type of store maintains the information required to query the status of a message in delivery. This might contain information such as application and network correlation ticket information, and session or connection mapping information.

The packaging layer 510 represents how the application and infrastructure components are deployed, for example as products in a suite. Products may include those set out below and described in more detail in the following description.

MSP: The Mobile Service Platform (MSP) 526 is the gateway between the network operator infrastructure and 3rd party applications which wish to invoke services on that infrastructure. One role of the MSP may be to provide a store & forward delivery service which includes but is not limited to routing, filtering, and protocol translation.

MDP: The Mobile Delivery Platform (MDP) 528 is an intelligent message router that provides a bridge between the IP and SS7 transport protocols. The MDP may support various services including First Delivery Attempt (FDA) and SMS firewall capabilities. The MDP 528 may be provided as a separate platform in its own right, without being integrated with the rest of the MDSA framework.

MCP: The Mobile Charging Platform (MCP) 530 is responsible for providing access to the BSS systems of the network operator's infrastructure. This includes but is not limited to real-time payment systems, postpay systems (e.g., CDR file stores), and subscriber profile databases. The MCP may support a series of protocol adaptors in order to connect to various backend systems as well as a configurable workflow engine that enables network operators to provision different charging profiles for various service and subscriber types.

MMP: The Mobile Management Platform (MMP) 532 is responsible for providing a common interface for coordinating management, configuration, and provisioning functions across the system. The MMP 532 is comprised of a series of adaptors that integrate the management functionality of the various components (e.g., MSP, MCP) into a single consistent view that provides a view of a single unified environment. The MMP also supports a number of interfaces for supplying or obtaining management information including a standard web console as well as interfaces via RMI, web services, and SNMP.

As will be clear to one skilled in the art, throughout the description, the term 'message' may be used to refer to any type of message or transaction data sent between components in the system. For example, a message may be a Multimedia Service (MMS) message or may be an Instant Messenger (IM) or email, facsimile or voicemail message. Further, the message may be a message relating to a transaction between users in the system or between a user and a service connected to the system.

Although the mobile telecommunications network described herein is an MM7 protocol based network, it will be clear to one skilled in the art that the systems and methods described herein may be implemented in any type of telecommunications network. For example, any GSM or TDMA, CDMA, GPRS, EV-DO or UMTS network, such as a 3G network, or an IP based networks.

One embodiment of a method that may be implemented in conjunction with the present system will now be described. It will be clear to one skilled in the art that variations may be provided to the system and method described below and the example is not intended to be limiting.

Messaging applications, such as content providers or marketing applications, send out batches of messages to selected destination entities. Once a message has been distributed to its destinations, however, the originating messaging application receives very little feedback in relation to the message and it is difficult for the originator to determine the effect of the message on its recipients.

There is described below a method of monitoring the distribution of messages in a network comprising at least one message originating entity and a plurality of message destination entities, the method comprising:
receiving a first message from a message originating entity;
determining an identifier for the first message;
transmitting the first message to at least some of the plurality of message destination entities;
receiving at least one further message from the plurality of message destination entities;
determining an identifier for the or each further message;
comparing the identifier for the or each further message with the identifier for the first message;
if the identifiers correspond, generating a notification indicating an onward transmission event for the first message.

In some situations, the message originating entities may be interested in obtaining feedback to determine the effect of their messages on the recipients. Generating a notification each time one of the original messages is resubmitted for further transmission may enable the first message originating entity to determine the impact of a particular message by providing an indication of the number of friends each recipient forwards the message to. Further, identifying messages in this way may enable the system to control or restrict the distribution of messages in the system, as described in more detail below. The identifier may be a signature or finger print for the message, as described in more detail below.

In a preferred embodiment, the identifier comprises an identifier associated with the message content. While an identifier for the message could be derived from the message header, using the message content may be advantageous since it is less likely to be amended by the user when the message is forwarded. The message content may comprise, for example an image, video clip, audio file or application file, such as a game. On forwarding the message, the user may amend the message header to forward a further message by text to the further destination, hence the header for the message may be amended.

The method may further comprise generating the identifier based on at least a portion of the message content. That is, the identifier may be determined or calculated based on the content data, rather than simply being extracted from the message.

The identifier may comprise a signature or finger print for the message. In one embodiment, generating the identifier comprises performing a checksum calculation on at least a portion of the message content or calculating a hash value for at least a portion of the message content. Hence an identifier may be calculated for each message. In one embodiment, the identifier may be a 32-bit identifier, for example generated using a checksum or hash technique. In one embodiment, the identifier may be based on an attribute associated with the message, for example it may be based on the message size.

In one embodiment, the identifier may be an identifier that is unique to the message. However, in many embodiments, it is unlikely to be necessary to ensure that the identifier is globally unique. It may be sufficient to use an identifier that has a strong probability of being unique, for example in a particular portion of the network or over a particular time period.

Preferably, the method further comprises forwarding the further message to its destination.

In one embodiment, the method further comprises forwarding the notification to a statistics component. A central statistics component may gather and manage notifications from a number of different message transmission components.

Preferably, the method further comprises determining a measure of onward transmission of the first message based on the notifications. This measure may be reported back to the message originating entity to provide feedback, in terms of a quantitative measure, of how often a particular message is forwarded within the network.

In one embodiment, the measure of onward transmission comprises a value indicating the proportion of the message destination entities that forward the message to a further destination. Hence, the measure may be based on the number or proportion of the original messages that are forwarded by their respective recipients.

In one embodiment, the network comprises a mobile telecommunications network. As set out below, the network may be implemented using any convenient network protocol or combination of protocols, for example, MM7, SS7, GPRS or IP.

In one embodiment, the message comprises an MMS message. In alternative embodiments, the method may be implemented with other message types, such as SS7, email, Instant Messenger, facsimile or voicemail messages.

The message originating entity may comprise an application, for example a content provider application or a marketing application.

Preferably, transmitting the message comprises determining a plurality of destination identifiers for the at least some of the plurality of message destination entities and transmitting a copy of the message to each message destination entity.

In one embodiment, determining a plurality of destination identifiers comprises receiving a list of destination identifiers from the message originating entity. Hence the message originator may define to whom the message should be sent.

In one embodiment, the method may further comprise, in response to generating a notification, blocking further transmission of the message. As described in more detail below, this may be implemented due to rights management of the message or due to the content of the message being unsuitable for onward transmission.

In one embodiment, the method further comprises, in response to generating a notification, implementing a charging strategy for the further message. As described in more detail below, this may entail charging the originator or the destination of the further message for further transmission of the message content.

There is also described below a method of controlling the distribution of messages in a network comprising a plurality of message originating entities and a plurality of message destination entities, the method comprising:
receiving at least one identifier associated with a blacklisted message;
storing the at least one identifier in a database of blacklisted message identifiers;
receiving a message from a message originating entity for onward transmission to a message destination entity;
determining an identifier for the message;
comparing the identifier for the message with the database of blacklisted message identifiers; if the identifiers correspond, blocking further transmission of the message.

Hence messages may be blacklisted, for example on the request of a network user, and further transmission of those messages in the network may be blocked.

Preferably, determining an identifier for the message comprises calculating the identifier based on the message contents.

Preferred features of the first aspect may be applied to the second aspect.

There is also described below a method of forwarding a message, including a message content portion, via a network to a selected message destination entity, the method comprising:
receiving the message content portion from a first location in the network;
selecting an option to forward the message to the destination entity;
generating a notification message for the destination entity, the notification message including an identifier of the first location in the network, from which the destination entity can obtain the message content portion;
transmitting the notification message to the destination entity.

Advantageously, the method may reduce the need for message content that has been downloaded from the network to be re-uploaded to the network. This may preserve bandwidth in the system and reduce the data transfer costs for users. Further, the method may reduce wasted storage capacity in the network. Further details of embodiments of the system and method, and their associated advantages, are set out below.

There is also described below a method of managing the storage of messages in a network, the method comprising:
receiving a message for onward transmission to a first destination entity;
determining an identifier associated with the message;
storing a message content portion associated with the message;
receiving a further message from the first destination entity for onward transmission to a second destination entity;
determining an identifier associated with the further message;
based on the identifiers, determining that a message content portion associated with the further message is the same as the message content portion associated with the message;
directing the second destination entity to the stored message content portion associated with the message.

Advantageously, the method may reduce the number of message content portions stored as duplicates in the network. Since, preferably, it the system recognises that it already stores one copy of the content, it may not store further copies for further messages. Embodiments of this aspect and their associated advantages are described in more detail below.

Preferably, the method further comprises discarding the message content portion for the further message. Hence the method may avoid storing duplicate copies in the network.

In one embodiment, directing the second destination entity to the stored message content portion comprises modifying a notification message for the further message. The modified notification message may enable the second destination entity to retrieve the original copy of the message content.

In an alternative embodiment, directing the second destination entity to the stored message content portion comprises storing forwarding instructions to direct the second destination entity to the stored message content portion. Hence the second destination entity may initially look to the place where the message content would usually be stored. However, in place of the message content, the second destination entity would simply find an indication of where the message content can be obtained.

Apparatus for performing the methods set out above, as well as corresponding computer programs, computer program products and computer readable media, may also be implemented by the skilled person.

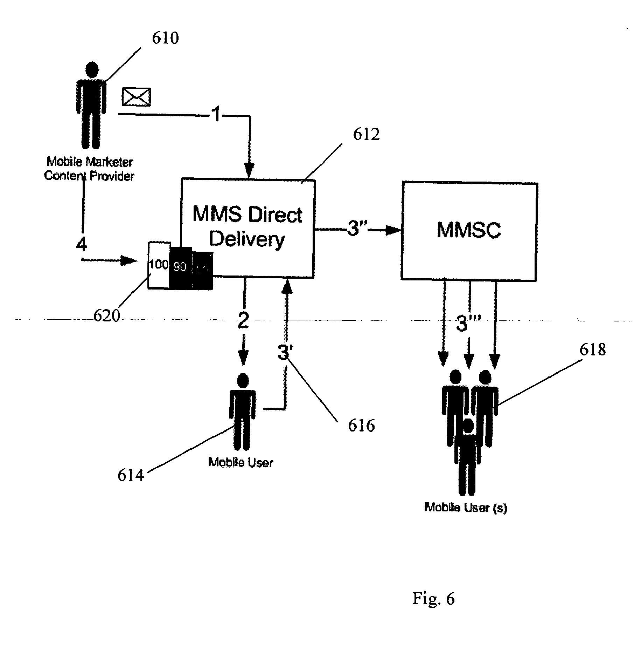

The system and method described above will now be described in more detail with reference to Figure 6.

A message originator 610, usually in the form of an application such as a mobile marketing tool or a content provider application, generates a message for a plurality of destinations. The message is transmitted to an MMS Direct Delivery (DD) system 612 or application together with identifiers of the destination entities 614 for which the message is intended. This may be in the form of a list or a range of destination identifiers, such as MSISDN numbers.

On receipt of the message, the MMS DD system 612 determines an identifier for each message. In one embodiment, this may include generating a "fingerprint" for each message based on the message content. This may be done by applying an algorithm, for example a checksum, to the message content data to generate an identifier associated with that message, which forms the fingerprint for the message. In an alternative embodiment a hash value may be created from the message content, or a portion of the content. Alternatively, the identifier may be based on an attribute of the message, for example it may be based on the message size.

In an alternative embodiment, the system may detect an existing identifier in the message. For example, the content provider 610 may insert an identifier into the message content or header that is then detected and noted by the MMS DD system 612.

In one embodiment, as described in more detail below, the MMS DD system 612 may determine an identifier for every message submitted for delivery. Alternatively, the MMS DD system 612 may generate the identifier only for messages for which such a "tracking" request has been made. For example, a flag may be set in selected messages to indicate that an identifier should be generated for those messages.

The system 612 then transmits the message to each of the destinations 614, preferably via MM1 proxy servers as described herein. On receipt of the message, the user may view the message and decide to forward the message 616 to a further user 618, for example a friend or colleague.

The forwarded message 616 is sent back from the user 614 to the MMS Direct Delivery system 612, for example to the user's MM1 proxy. The MMS DD system 612, preferably the MM1 proxy, determines an identifier for the forwarded message and compares the identifier to those of earlier messages that have been sent via the MMS DD system 612. If the identifier matches an identifier of an earlier message, the MM1 proxy may send a forwarding notification message 620 to a central MMS Tracking statistics component.

The statistics component stores a list of the identifiers associated with each MMS message. On receipt of a forwarding notification message, the component determines which MMS message the notification is associated with and increases a forwarding tally associated with the message. Based on this information, statistics relating to the number of times a particular message has been forwarded may be fed back to the originating application 610. The statistics component may be implemented in conjunction with a campaign manager platform (CMP).

The statistics may include, for example, details relating to:
- the number of times a message has been forwarded
- the rate at which the message is forwarded (i.e. the time that it takes for the message to be forwarded after receipt)
- the number of unique recipients that have received the message (if the message destination identifier is also forwarded to the statistics component)
- the number times a particular message has been forwarded (if the message originator and destination identifiers are also forwarded to the statistics component)

The originating application 610 may use this information, for example, to determine the extent of reach of the original set of messages which may be useful, for example in determining the "viral effect" of a particular message or campaign.

The statistics component may be implemented as a separate physical entity in the MMS DD system and messages may be sent to it across a network. In one embodiment, however, the component may be implemented as part of the MMS DD software, either at a central MMS DD component or distributed across multiple components in the network, for example across the MM1 proxies. If the statistics component is implemented as a distributed system, for example as agents, the agents may be connected via a network separate to the mobile telecommunications network, for example an IP or Infiniband network.

In one embodiment, the system may retain a list of the identifiers of the destination entities to which the original message was sent. On forwarding of the message, the MMS DD system may determine not only an identifier associated with the message, but also an identifier of the message originator for the forwarded message. The system may then check both that the message identifier corresponds to that of the original message and that the originator identifier corresponds to one of the destination entities to which the message was sent. This may ensure that the forwarded message has resulted from a particular originating message and may enable the system to report, for example, the proportion of a batch of messages that was forwarded.

This may be useful, for example, if the same message is sent out to several different groups of destinations, but the originating application wishes to determine the effect of a particular batch of messages, for example to determine the most effective time at which to send out batches of messages.

In a further embodiment, the present system may be implemented as part of a rights management system. The destination entity for the first group of messages may pay for access to particular message content, which may be transmitted using the MMS DD system as described herein. As also described, an identifier of the message may be stored in the MMS DD system. If the user forwards the message, via the MMS DD system, to a further destination, the forwarded message may be identified based on the stored identifier. If the user is not permitted to forward the message, for example due to user rights associated with the message, the message may be blocked at the MMS DD system.

If the user is permitted to forward the message, but the message includes valuable content, such as a game or a ringtone, the identification of the message may enable the MMS DD system to ensure that some revenue is returned to the content provider due to the forwarding of the message. For example, the entity forwarding the message may pay a fee for forwarding the message or the destination entity for the forwarded message may pay a fee for the content to the content provider. That is, after receiving the consent of the destination entity, a fee may be charged to access the message content.

As set out above, in one embodiment, an identifier may be determined for every message submitted for delivery, whether from an application or a mobile entity. This may enable the system to block the transmission of messages identified as undesirable. Such undesirable messages may be identified in the network, for example by spam software or as a result of a notification from a user. The identifier, such as a fingerprint, for that message may be stored on a message blacklist, which may be maintained in the MMS DD system and is preferably copied to each MM1 proxy. On submission of a message having that identifier, the message may be trapped by the MM1 proxy and not forwarded further. Details of the message, such as the identifier and details of the originating entity for the forwarded message may be transmitted to a central monitoring system.

In the system described above, messages forwarded by mobile entities connected to the MMS DD system, "on-net" entities, are forwarded via the MM1 proxies of the MMS DD system.

The on-net entities may forward the message to "off-net" entities connected to the networks of other operators. These messages forwarded by the on-net entities will be analysed and incorporated into the relevant statistics before being transmitted off-net. However, if the off-net entity subsequently forwards the message again, this forwarded message will not be transmitted through the MMS DD system (unless the message is being forwarded back to an on-net entity, in which case it may be detected using the system described above).

It may be determined that a measure of the number of times a message is forwarded on-net is sufficient to provide an indication of the "viral effect" of the message. These details may also be extrapolated to provide an estimate for the total number of forwards both on-net and off-net.

However, if the originating application provider wishes to determine by direct measurement how many times a message has been forwarded both on-net and off-net, a different technique may be employed.

In some embodiments, the message content may be implemented to incorporate a script or section of code. When the destination entity opens the forwarded message, the script may be implemented to send a notification message, including the message identifier, back to the MMS DD statistics component. The return message may be sent back over the MM7 network or over an SS7 network (at the cost of the application originator or, by prior agreement, at the cost of the user). Alternatively, if the destination entity is connected to another network, such as an IP network, the message may be transmitted over this alternative network.

It is noted that any automatic transmission of messages from the destination entity for which the user of the destination entity will incur a charge should be pre-authorised by the user.

When a message is sent to a plurality of destination entities from an application, efficiencies may be achieved, as described herein, by transmitting one message from the application into the MMS DD system and replicating that message for transmission to each entity. As also described herein, an identifier may be generated for that message in the MMS DD system.

If the message is then forwarded by the original destination entity to a further destination, however, the MMS message, including the content, is uploaded from the original destination entity back to the message delivery system, for example the MMSC or MM1 proxy. The message content is stored in the system and a notification message is sent to the further destination. On receipt of the notification, the further destination entity accesses the stored message content and downloads the content over a communication link, for example over GPRS.

In summary, the process of forwarding the message is entirely independent of the original message delivery process and the message content for the forwarded message is not associated with the original message in any way. This may lead to a number of inefficiencies in the message sending process. In particular, the original message content is downloaded to the original destination entity on delivery of the first message and is then re-uploaded from the destination entity to the MMS delivery system on forwarding the message. This is an inefficient use of bandwidth and may be expensive for the destination entity user if they are charged for the connection time or the amount of data transferred. Further, once the message has been uploaded, it is stored within the MMS delivery system, separately to the original message content. This is an inefficient use of storage in the MMS delivery system, since at least two copies of the message content are stored in the network. If the original message is sent to a plurality of destination entities and each destination entity forwards the message to a plurality of friends, this may lead to significant inefficiencies and wasted storage capacity in the network.

One embodiment of the present system may be implemented to address these problems. In particular, the system may reduce the need for message content to be re-uploaded to the network and/or reduce the amount of storage space wasted in the network.

On receipt of an MMS message, a user may be presented with an option to forward the message to a friend via a "fast forward" or "send to a friend" option. On selecting this option, the user may be requested to enter one or more destination identifiers to identify the users to whom the message should be forwarded.

A notification message may then be generated containing details of the URL from which the first entity obtained the message content. This notification message may then be transmitted to the one or more destination identifiers without the message content being re-uploaded to the system or stored at a separate location within the system.

Preferably, the notification message is transmitted via the MM1 proxy of the MMS DD system described herein, which may verify that the message content is still available at the URL. If the content is no longer available, the user may be notified that the message should be sent using the standard MMS re-upload procedure.

On receipt of the notification message, the further destination entity may obtain the message content from the URL provided in the message, which is the same place from which the original destination entity obtained the message content.

Hence embodiments of the present system may avoid message content being re-uploaded to the system and further copies of the data being stored in the system when a received message is forwarded.

The "fast forward" or "send to a friend" system described above may be implemented by implementing software on each user handset to over-ride the standard MMS delivery procedures in some circumstances. However, while this may be done for new handsets, it is much more difficult to upgrade the software of existing handsets that are in use.

In an alternative embodiment, the functionality to implement this system may be provided in the original message itself, for example as a script, applet or short length of code. For example, if the message content is a picture, a selectable link may be provided at the bottom of the picture that reads "Send to a Friend", or another appropriate indication. Selection of this link may cause the message forwarding procedure set out above to be implemented.

In a further embodiment, that may be implemented independently or in conjunction with the system described above, an identifier may be determined for any message content data re-uploaded by a standard MMS forwarding procedure. The identifier may be compared to the identifiers of the message content already stored within the system. If the system already stores message content having the same identifier, a further copy of the message may not be stored. Either the notification message may be amended to ensure that the URL points to the location of the stored data or the notification message may be left unchanged and forwarding instructions may be stored at the URL to which the destination entity will be directed to obtain the data. The forwarding instructions may notify the destination entity where the data should be obtained.

One embodiment of a further method that may be implemented in conjunction with the present system will now be described

There is described below a method of handling messages in a network, the method comprising:
transmitting a_message to at least one destination entity, wherein the message includes first content and a selectable link to further content associated with the message and wherein selection of the link triggers supply of the further content;
monitoring selection of the link;
in response to selection of the link, updating feedback data associated with the message;
communicating feedback data to an entity associated with the originator of the message.

Hence the present method may enable the handling and monitoring of a message by determining whether a user selects an embedded link. This may provide an indication of how interested the user is in a particular message or its subject matter. The method may be applied to a message sent to a plurality of destinations and the feedback data may then provide an indication of the proportion of destination users interested in the message content.

Preferably, monitoring selection of the link comprises recording each request for access to the link. Hence the request may be counted, rather than counting the selection on provision of the data.

In one embodiment, the selection of the link is monitored at a component storing the further content associated with the message. For example, a web server that stores the further content may also be implemented with a monitoring agent for monitoring requests to access the further content.

In an alternative embodiment, the selection of the link is monitored at a message transmission component in the network. For example, in one embodiment, the request to access the content may pass from the destination entity back into the network before being transmitted to the component storing the content. A component in the network may then record the request. Such a component may be implemented as a separate physical entity but, preferably, is implemented as an agent or application running on one or more existing components in the network.

In a preferred embodiment, the feedback data comprises a measure of the selection of the link to the further content resulting from the transmission of the message. In the case of just one message, this may simply comprise a binary "Message Selected?" Yes/No indication. For a situation wherein a plurality of messages containing the same link has been set to a plurality of destinations, the feedback data may include an indication of the proportion of destination entities that selected the link.

The feedback data may further comprise an indication of the time between the transmission of the message to the at least one destination entity and the selection of the link.

In a preferred embodiment, the further content is external to the message.

Alternatively, the further content may comprise a further portion of the message.

In a highly preferred embodiment, the selectable link comprises a URL.

Preferably, the further content comprises Internet-based content. However, the content may be accessed from the Internet via a mobile telecommunications network.

In one embodiment, the feedback data includes an identifier of the selecting destination entity. Hence the data may include details of each user who selected the link. For example, the details may comprise the MSISDN number of the destination entities that select the link. This may enable the message originator to direct further messages to users who are likely to be interested in the message content.

In one embodiment, the entity associated with the originator of the message comprises a message-originating application. Hence the feedback data may be communicated back to the source of the original message.

In an alternative embodiment, the entity associated with the originator of the message comprises a central feedback system. The feedback system may receive data relating to a plurality of different messages originating from a plurality of different sources. Once the feedback has been gathered, this data may be transmitted to the message originators.

Apparatus for performing the method set out above, as well as corresponding computer programs, computer program products and computer readable media, may also be implemented by the skilled person.

The methods set out above will now be described in more detail with reference to Fig. 6.

A message originating entity 610, such as an application, which may be a mobile marketing or content provider application, generates a message that includes an embedded link 622 in the message. The message may form part of a campaign, for example a marketing campaign or a campaign to raise awareness of a particular service.

The message may be transmitted to a plurality of destination entities 614 via a delivery system 612, such as the MMS Direct Delivery (DD) system described herein. On receipt of the message, the user opens the message and the embedded link is presented to the user. The user may then select the link in the message 616, for example if the user is interested in obtaining further information from the link.

In the present system, the request for access to the link 616 passes back through the MMS system 612, since the destination user 614 is connected to this system. The MMS DD system 612 generates an indication that the link has been accessed. This may comprise an indication in an internal database 620 or a notification message that may be transmitted back to the originating application 610 or to a central monitoring system. In this way, every recipient that "clicks through" the message is noted.

In alternative embodiments, the request for access to the link may pass via a portal 618 through a network separate to the mobile telecommunications network, for example via an IP network. In this embodiment, the request may be noted at the portal 618 or at the component where the link information is held. An identifier of the requesting user may also be stored with the note that the request was made.

Such a system may enable the system to determine the level of interest generated by a particular message and hence may provide an indication of the success of a messaging campaign. This information 620 may be transmitted back to the messaging application 610. Further, if an identifier of the requesting user is retained, the information may enable the provider to target further messages to users who are likely to be interested in the message content.

It will be clear to one skilled in the art that the present system has a wide range of possible uses and variations may be provided to the system described above. In particular, the method steps and functions described may be implemented at other components in the network or in the MMS DD system. Further, components of the system may be implemented in the same physical equipment or may be distributed across a plurality of different physical entities.

The system has been described with particular reference to MMS messages but the system is also applicable to other message types such as SMS, Instant Messenger, email or facsimile messages. Similarly, the system has been described with reference to an MM7 telecommunications network, but may be implemented on any appropriate network, for example, an SS7, GPRS, 3G or other telecommunications network or an IP-based network. In one embodiment, different portions of the network may be implemented using different network types.

It will further be clear to one skilled in the art that the message transmission systems, methods and strategies described above may be implemented separately or in combination. Further, systems may be implemented in conjunction with other system components described herein. Modifications may be provided to the systems and methods described herein, for example to apply the methods described to other types of messages or networks.

Embodiments of the method and apparatus described herein are further set out and described below in the following numbered clauses:
1. A method of processing a message in a message transmission network, the network comprising at least one message handling component for receiving a message from at least one message originating entity and a plurality of message delivery components for transmitting the message to at least one destination entity in the message transmission network, the method comprising:
   receiving a message at the message handling component for transmission to at least one destination entity;
   retrieving a predefined list of message formats for the message;
   formatting at least a portion of the message in accordance with at least one message format from the predefined list of message formats;
   storing the portion of the message as a preformatted portion for subsequent delivery.
2. A method according to Clause 1 further comprising formatting the at least a portion of the message in accordance with a plurality of message formats from the predefined list of message formats.
3. A method according to Clause 2 wherein the at least one message format or the plurality of message formats is selected from the predefined list of message formats based on at least one criterion.
4. A method according to Clause 3 wherein the at least one criterion comprises at least one of:
   at least one identifier associated with a destination entity for the message;
   at least one identifier of the type of the destination entity for the message;
   an attribute associated with the message;
   an identifier associated with the originating message entity; and
   at least one message format used for transmission of a previous message.
5. A method according to any preceding clause further comprising formatting the at least a portion of the message in accordance with each message format in the predefined list of message formats.
6. A method according to any preceding clause comprising:
   receiving a request for delivery of the message from a destination entity;
   determining a format for the message based on at least one attribute of the destination entity; and
   reviewing the predefined list of message formats to determine whether the message format determined is included in the predefined list of message formats.
7. A method according to Clause 6 wherein, if the message format determined is included in the predefined list of message formats, the method further comprises:
   determining whether the message has been preformatted according to the message format determined; and
   delivering the message including the preformatted portion of the message to the destination entity.
8. A method according to Clause 6 or 7 wherein, if the message format determined is not included in the predefined list of message formats, the method further comprises:
   formatting the message according to the message format determined and forwarding the message to the destination entity;
   storing the message format determined in the list of message formats.
9. A method according to any preceding clause wherein storing the message comprises staging the message at a plurality of distributed message delivery components in the message transmission network.
10. A method according to any preceding clause further comprising delivering the message, including the preformatted portion of the message or a selected preformatted portion of the message to a destination entity via the message transmission network.
11. A method according to any preceding clause further comprising forwarding the preformatted portion of the message to at least one message delivery component in the message transmission network.
12. A method according to any preceding clause further comprising forwarding the preformatted portion of the message to a plurality of distributed message delivery components in the message transmission network.
13. A method according to any preceding clause wherein formatting at least a portion of the message comprises formatting the audio or video content of the message.
14. A method according to any preceding clause wherein formatting at least a portion of the message comprises converting the portion of the message to a JPEG format.
15. A method according to any preceding clause wherein formatting at least a portion of the message comprises converting the portion of the message to a GIF format.
16. A method according to any preceding clause wherein the message transmission network comprises a mobile telecommunications network.
17. A method according to any preceding clause wherein the message comprises a Multimedia Messaging Service (MMS) message.
18. A method according to Clause 17 wherein the portion of the message comprises MMS message content.
19. A method according to any of Clauses 1 to 16 wherein the message comprises an email, facsimile, voicemail or instant messenger message.
20. Apparatus for processing a message in a message transmission network, the network comprising at least one message handling component for receiving a message from at least one message originating entity and a plurality of message delivery components for transmitting the message to at least one destination entity in the message transmission network, the apparatus comprising:
   means for receiving a message at the message handling component for transmission to at least one destination entity;
   means for retrieving a predefined list of message formats for the message;
   means for formatting at least a portion of the message in accordance with at least one message format from the predefined list of message formats;
   means for storing the portion of the message as a preformatted portion for subsequent delivery.
21. A method of transmitting a message to at least one destination entity via a message transmission network, the network comprising at least one message handling component and a plurality of message delivery components, the network having a network edge for interfacing with message originating and destination entities using a user device protocol, wherein the message delivery components are arranged between the message handling component and the network edge, the method comprising:
   receiving a message at a message handling component for transmission to at least one destination entity;
   forwarding at least a portion of the message to a plurality of message delivery components;
   staging the at least a portion of the message at the plurality of message delivery components;
   receiving a request from the destination entity at at least one message delivery component to retrieve the at least a portion of the message.
22. A method according to Clause 21 further comprising forwarding the at least a portion of the message to the destination entity using the user device protocol.
23. A method according to Clause 21 or 22 wherein the message delivery components comprise a plurality of proxies connected to the message handling component.
24. A method according to any of Clauses 21 to 23 wherein the message delivery component communicates directly with the destination entity.
25. A method according to any of Clauses 21 to 24wherein the message delivery component communicates with the destination entity without passing through a gateway component.
26. A method according to any of Clauses 21 to 25 wherein the at least a portion of the message is preformatted in one of a plurality of message formats from a predefined list of message formats.
27. A method according to any of Clauses 21 to 26 wherein receiving a request from the destination entity comprises receiving the request at a load balancing component associated with the message delivery components, wherein the load balancing component selects a message delivery component to which to direct the request.
28. A method according to any of Clauses 21 to 27 wherein the message handling component and the plurality of message delivery components are interconnected over a network separate to the mobile telecommunications network.
29. A method according to any of Clauses 21 to 28 wherein the user device protocol comprises a wireless application protocol (WAP).
30. Message transmission network apparatus for transmitting a message to at least one destination entity, the network apparatus comprising at least one message handling component and a plurality of message delivery components, the network having a network edge for interfacing with message originating and destination entities using a user device protocol, wherein the message delivery components are arranged between the message handling component and the network edge, the network apparatus comprising:
   means for receiving a message at a message handling component for transmission to at least one destination entity;
   means for forwarding at least a portion of the message to a plurality of message delivery components;
   means for staging the at least a portion of the message at the plurality of message delivery components; and
   means for receiving a request from the destination entity at at least one message delivery component to retrieve the at least a portion of the message.
31. A message delivery component in a message transmission network, the network comprising at least one message handling component and a plurality of message delivery components, the network having a network edge for interfacing with message originating and destination entities using a user device protocol, the method comprising:
   means for receiving at least a portion of a message in a first message format from a message handling component;
   means for staging the at least a portion of a message;
   means for receiving a request for the at least a portion of a message from a message destination entity;
   means for communicating with the message destination entity in the user device protocol to transmit the at least a portion of the message using a first communication pathway to the message destination entity.
32. A message delivery component according to Clause 31 wherein the network further comprises at least one gateway component using a gateway device protocol and wherein the message delivery component further comprises means for communicating with the gateway component in the gateway device protocol to transmit the at least a portion of the message using a second communication pathway via the gateway component to the message destination entity.
33. A message delivery component according to Clause 31 or 32 further comprising means for selecting a communication pathway using which to transmit the at least a portion of the message.
34. A message delivery component according to any of Clauses 31 to 33 wherein the at least a portion of the message is received in a plurality of message formats and wherein the message delivery component further comprises:
   means for selecting a message having a particular message format to transmit to the message destination entity.
35. A message delivery component according to any of Clauses 31 to 34 wherein the message delivery component further comprises means for analysing the request received from the message destination entity to determine the message format in which to transmit the portion of the message.
36. A message delivery component according to any of Clauses 31 to 35 wherein the user device protocol comprises a WAP protocol.
37. A message transmission network comprising at least one message handling component and a plurality of message delivery components, the network having a network edge for interfacing with message originating and destination entities using a user device protocol;
   wherein the at least one message handling component comprises:
   means for receiving at least one message from a message originating entity for transmission to at least one message destination entity;
   means for forwarding at least a portion of the message to at least one message delivery component;
   wherein the plurality of message delivery components each comprise
   means for receiving the least a portion of a message from the message handling component;
   means for staging the at least a portion of a message;
   means for receiving a request for the at least a portion of a message from a message destination entity; and
   means for communicating with the message destination entity in the user device protocol to transmit the at least a portion of the message using a first communication pathway to the message destination entity.
38. A network according to Clause 37 wherein the network further comprises at least one gateway component using a gateway device protocol and wherein at least one message delivery component further comprises:
   means for receiving a request for the at least a portion of a message from a message destination entity via the gateway component; and
   means for communicating with the gateway component using the gateway device protocol to transmit the at least a portion of the message using a second communication pathway via the gateway component to the message destination entity.
39. A network according to Clause 37 or 38 wherein the at least one message delivery component further comprises means for selecting a communication pathway from the first and second communication pathway via which to transmit the at least a portion of the message.
40. A network according to any of Clauses 37 to 40 wherein the at least a portion of the message is received in a plurality of message formats and wherein the or each message delivery component further comprises:
   means for selecting a message having a particular message format to transmit to the message destination entity.
41. A network according to any of Clauses 37 to 40 wherein the or each message delivery component further comprises means for analysing the request received from the message destination entity to determine the message format in which to transmit the portion of the message.
42. A network according to any of Clauses 37 to 41 wherein the user device protocol comprises a WAP protocol.
43. A method of transmitting a message in a message transmission network comprising at least one message handling component and a plurality of message delivery components, the network having a network edge for interfacing with message originating and destination entities using a user device protocol, the method comprising:
   receiving at least one message at a message handling component from a message originating entity for transmission to at least one message destination entity;
   forwarding at least a portion of the message to at least one message delivery component;
   receiving the least a portion of a message from the message handling component at at least one message delivery component;
   staging the at least a portion of a message;
   receiving a request for the at least a portion of a message from a message destination entity; and
   communicating with the message destination entity in the user device protocol to transmit the at least a portion of the message using a first communication pathway to the message destination entity.

## Claims

1. A method of processing a message in a message transmission network, the network comprising at least one message handling component for receiving a message from at least one message originating entity and a plurality of message delivery components for transmitting the message to at least one destination entity in the message transmission network, the method comprising:
receiving a message at the message handling component for transmission to at least one destination entity;
retrieving a predefined list of message formats for the message;
formatting at least a portion of the message in accordance with at least one message format from the predefined list of message formats;
storing the portion of the message as a preformatted portion for subsequent delivery.

2. A method according to Claim 1 wherein the at least one message format or the plurality of message formats is selected from the predefined list of message formats based on at least one criterion, preferably wherein the at least one criterion comprises at least one of:
at least one identifier associated with a destination entity for the message;
at least one identifier of the type of the destination entity for the message;
an attribute associated with the message;
an identifier associated with the originating message entity; and
at least one message format used for transmission of a previous message.

3. A method according to Claim 1 or 2 further comprising:
receiving a request for delivery of the message from a destination entity;
determining a format for the message based on at least one attribute of the destination entity; and
reviewing the predefined list of message formats to determine whether the message format determined is included in the predefined list of message formats;
preferably wherein, if the message format determined is included in the predefined list of message formats, the method further comprises:
determining whether the message has been preformatted according to the message format determined; and
delivering the message including the preformatted portion of the message to the destination entity.

4. A method according to any preceding claim wherein storing the message comprises staging the message at a plurality of distributed message delivery components in the message transmission network.

5. Apparatus for processing a message in a message transmission network, the network comprising at least one message handling component for receiving a message from at least one message originating entity and a plurality of message delivery components for transmitting the message to at least one destination entity in the message transmission network, the apparatus comprising:
means for receiving a message at the message handling component for transmission to at least one destination entity;
means for retrieving a predefined list of message formats for the message;
means for formatting at least a portion of the message in accordance with at least one message format from the predefined list of message formats;
means for storing the portion of the message as a preformatted portion for subsequent delivery.

6. A method of transmitting a message to at least one destination entity via a message transmission network, the network comprising at least one message handling component and a plurality of message delivery components, the network having a network edge for interfacing with message originating and destination entities using a user device protocol, wherein the message delivery components are arranged between the message handling component and the network edge, the method comprising:
receiving a message at a message handling component for transmission to at least one destination entity;
forwarding at least a portion of the message to a plurality of message delivery components;
staging the at least a portion of the message at the plurality of message delivery components;
receiving a request from the destination entity at at least one message delivery component to retrieve the at least a portion of the message.

7. Message transmission network apparatus for transmitting a message to at least one destination entity, the network apparatus comprising at least one message handling component and a plurality of message delivery components, the network having a network edge for interfacing with message originating and destination entities using a user device protocol, wherein the message delivery components are arranged between the message handling component and the network edge, the network apparatus comprising:
means for receiving a message at a message handling component for transmission to at least one destination entity;
means for forwarding at least a portion of the message to a plurality of message delivery components;
means for staging the at least a portion of the message at the plurality of message delivery components; and
means for receiving a request from the destination entity at at least one message delivery component to retrieve the at least a portion of the message.

8. A message delivery component in a message transmission network, the network comprising at least one message handling component and a plurality of message delivery components, the network having a network edge for interfacing with message originating and destination entities using a user device protocol, the method comprising:
means for receiving at least a portion of a message in a first message format from a message handling component;
means for staging the at least a portion of a message;
means for receiving a request for the at least a portion of a message from a message destination entity;
means for communicating with the message destination entity in the user device protocol to transmit the at least a portion of the message using a first communication pathway to the message destination entity.

9. A message transmission network comprising at least one message handling component and a plurality of message delivery components, the network having a network edge for interfacing with message originating and destination entities using a user device protocol;
wherein the at least one message handling component comprises:
means for receiving at least one message from a message originating entity for transmission to at least one message destination entity;
means for forwarding at least a portion of the message to at least one message delivery component;
wherein the plurality of message delivery components each comprise
means for receiving the least a portion of a message from the message handling component;
means for staging the at least a portion of a message;
means for receiving a request for the at least a portion of a message from a message destination entity; and
means for communicating with the message destination entity in the user device protocol to transmit the at least a portion of the message using a first communication pathway to the message destination entity.

10. A method of transmitting a message in a message transmission network comprising at least one message handling component and a plurality of message delivery components, the network having a network edge for interfacing with message originating and destination entities using a user device protocol, the method comprising:
receiving at least one message at a message handling component from a message originating entity for transmission to at least one message destination entity;
forwarding at least a portion of the message to at least one message delivery component;
receiving the least a portion of a message from the message handling component at at least one message delivery component;
staging the at least a portion of a message;
receiving a request for the at least a portion of a message from a message destination entity; and
communicating with the message destination entity in the user device protocol to transmit the at least a portion of the message using a first communication pathway to the message destination entity.
